# EUROPÄISCHE PATENTSCHRIFT

(11) **EP 2 764 505 B1**
(45) Veröffentlichungstag und Bekanntmachung des Hinweises auf die Patenterteilung: **29.07.2015**
(21) Anmeldenummer: 12745836.2
(22) Anmeldetag: 06.08.2012
(51) Int. Cl.: G08G 1/0967

(54) **ANZEIGEVERFAHREN UND ANZEIGESYSTEM FÜR EIN FAHRZEUG**
DISPLAY METHOD AND DISPLAY SYSTEM FOR A VEHICLE
PROCÉDÉ ET SYSTÈME D'AFFICHAGE POUR UN VÉHICULE

(30) Priorität: 06.10.2011 DE 102011084084
(43) Veröffentlichungstag der Anmeldung: 13.08.2014
(73) Patentinhaber: Robert Bosch GmbH, 70442 Stuttgart (DE)
(72) Erfinder: NORDBRUCH, Stefan, 70806 Kornwestheim (DE); ROUS, Martin, 74395 Mundelsheim (DE)
(86) Internationale Anmeldenummer: PCT/EP2012/065351
(87) Internationale Veröffentlichungsnummer: WO 2013/050190

(56) Entgegenhaltungen:
- EP-A2- 1 283 406
- DE-A1-102004 009 924
- DE-A1-102006 010 478
- DE-A1-102009 058 140

## Beschreibung

Die Erfindung betrifft ein Anzeigeverfahren und ein Anzeigesystem für ein Fahrzeug. Die Erfindung betrifft ferner ein Fahrerassistenzsystem für ein Fahrzeug sowie ein Computerprogramm.

### Stand der Technik

Fahrerassistenz- und Fahrerinformationssysteme als solche sind beispielsweise aus der Offenlegungsschrift US 2009/0092334 A1 bekannt. In dieser Offenlegungsschrift wird ein System beschrieben, welches auch als "Surround View"- und/oder "Bird View"-System bezeichnet wird. Hierbei wird ein Bereich rund um ein Fahrzeug mittels einer Kamera aufgenommen. Der aufgenommene Bereich wird dann einem Fahrer auf einem Bildschirm angezeigt.

Hier kann es beispielsweise vorkommen, dass die Kamera ausfällt oder einige Abschnitte in dem Bereich nicht ganz aufnehmen kann. Insofern kann dann die Ansicht auf dem Bildschirm unvollständig oder gar fehlerhaft sein.

Die Offenlegungsschrift EP 1 283 406 A2 zeigt eine Bildverarbeitungsvorrichtung für ein Fahrzeug und ein Betriebsverfahren.

Die Offenlegungsschrift DE 10 2006 010478 A1 zeigt ein Verfahren und eine Anordnung zur Anzeige von Navigationshinweisen.

Die Offenlegungsschrift DE 10 2004 009924 A1 zeigt ein Verfahren und eine Warnvorrichtung zum graphischen Aufbereiten eines Bildes einer Kamera.

Die Offenlegungsschrift DE 10 2009 058140 A1 zeigt ein Kraftfahrzeug mit einem Navigationssystem.

### Offenbarung der Erfindung

Die der Erfindung zugrunde liegende Aufgabe kann daher darin gesehen werden, ein verbessertes Anzeigeverfahren für ein Fahrzeug anzugeben, welches eine zuverlässige Darstellung einer Fahrzeugumgebung ermöglicht, auch wenn entsprechende Umgebungssensoren ausfallen.

Die der Erfindung zugrunde liegende Aufgabe kann auch darin gesehen werden, ein entsprechendes Anzeigesystem für ein Fahrzeug anzugeben.

Die der Erfindung zugrunde liegende Aufgabe kann ferner darin gesehen werden, ein entsprechendes Fahrerassistenzsystem für ein Fahrzeug sowie ein Computerprogramm bereitzustellen.

Diese Aufgaben werden mittels des jeweiligen Gegenstands nach den unabhängigen Ansprüchen gelöst. Vorteilhafte Ausgestaltungen sind Gegenstand von jeweils abhängigen Unteransprüchen.

Nach einem Aspekt wird ein Anzeigeverfahren für ein Fahrzeug bereitgestellt. Es wird eine Fahrzeugposition bestimmt. Anschließend werden Fahrzeugumfelddaten aus einer Datenbank abgefragt, wobei die Fahrzeugumfelddaten der bestimmten Fahrzeugposition entsprechen. Das heißt also insbesondere, dass Fahrzeugumfelddaten aus der Datenbank abgefragt werden, welche der bestimmten Fahrzeugposition zugeordnet sind.

Ferner wird ein Fahrzeugumfeld erfasst. Es wird dann eine Fahrzeugumfeldansicht angezeigt, wobei die Fahrzeugumfeldansicht auf den abgefragten Fahrzeugumfelddaten und dem erfassten Fahrzeugumfeld basiert.

Gemäß einem anderen Aspekt wird ein Anzeigesystem für ein Fahrzeug bereitgestellt. Das Anzeigesystem umfasst eine Positionsbestimmungseinrichtung, mittels welcher eine Fahrzeugposition bestimmt werden kann. Ferner ist ein Abfrager vorgesehen, welcher Fahrzeugumfelddaten entsprechend der bestimmten Fahrzeugposition aus einer Datenbank abfragen kann. Das heißt also insbesondere, dass der Abfrager eine Anfrage an die Datenbank stellt, so dass diese dann die entsprechenden Fahrzeugumfelddaten an den Abfrager übermittelt.

Des Weiteren umfasst das Anzeigesystem eine Erfassungseinrichtung zum Erfassen eines Fahrzeugumfelds. Ferner ist eine Anzeigeeinrichtung zum Anzeigen einer auf den abgefragten Fahrzeugumfelddaten und dem erfassten Fahrzeugumfeld basierenden Fahrzeugumfeldansicht gebildet.

Nach noch einem weiteren Aspekt ist ein Fahrerassistenzsystem für ein Fahrzeug bereitgestellt, wobei das Fahrerassistenzsystem ein Anzeigesystem für ein Fahrzeug umfasst.

Nach noch einem Aspekt ist ein Computerprogramm geschaffen, wobei das Computerprogramm Programmcode zur Ausführung des Anzeigeverfahrens für ein Fahrzeug umfasst, wenn das Computerprogramm auf einem Computer ausgeführt wird.

Die Erfindung umfasst also insbesondere den Gedanken, dass eine Fahrzeugumfeldansicht, welche insbesondere einem Fahrer zur Ansicht bereitgestellt werden kann, nicht nur basierend auf einem erfassten Fahrzeugumfeld gebildet wird, sondern zusätzlich auch basierend auf Fahrzeugumfelddaten, welche in einer Datenbank gespeichert sind. Das heißt also insbesondere, dass, selbst wenn das Fahrzeugumfeld fehlerhaft erfasst wird oder die Erfassungseinrichtung fehlerhaft arbeitet oder ganz ausfällt, immer noch eine Fahrzeugumfeldansicht basierend auf den abgefragten Fahrzeugumfelddaten gebildet werden kann. Somit wird zuverlässig einem Fahrer eine Fahrzeugumfeldansicht seines Fahrzeugs bereitgestellt. Eine Fahrsicherheit wird insofern in vorteilhafter Weise erhöht.

Fahrzeugumfelddaten im Sinne der vorliegenden Erfindung umfassen insbesondere Informationen über das Fahrzeugumfeld. Solche Informationen können beispielsweise physische Objekte betreffen. Ein physisches Objekt kann beispielsweise ein Verkehrszeichen, eine Signalanlage oder Begrenzungspfosten der Straße sein. Insbesondere umfassen die Fahrzeugumfelddaten physische Merkmale bzw. Eigenschaften der Straße wie beispielsweise eine Straßenbreite, eine Fahrbahnbreite, Kurvenradien und/oder Abfahrten. Insbesondere sind bei stationären physischen Objekten auch die jeweilige Position und Abmaßungen in den Fahrzeugumfelddaten gespeichert. Fahrzeugumfelddaten können insbesondere auch Informationen über aktuelle Gegebenheiten umfassen, wie beispielsweise, dass sich an der entsprechenden Position eine Baustelle mit veränderten Straßeneigenschaften befindet. Fahrzeugumfelddaten können insbesondere auch Fahrbahnspurdaten umfassen, welche beispielsweise die Information über eine Fahrbahnlinienfarbe umfassen.

Fahrzeugumfelddaten im Sinne der vorliegenden Erfindung umfassen insbesondere Bilder und/oder Videos, so dass bei einer entsprechenden Abfrage mittels des Abfragers die diesbezüglichen Videos und/oder Bilder an das Anzeigesystem übermittelt werden, so dass dann in vorteilhafter Weise die angezeigte Fahrzeugumfeldansicht die entsprechenden Videos bzw. Bilder umfassen kann.

Den Fahrzeugumfelddaten ist insbesondere eine entsprechende Position zugeordnet, so dass basierend auf der bestimmten Fahrzeugposition die entsprechenden Fahrzeugumfelddaten an der Fahrzeugposition dem Anzeigesystem zur weiteren Verarbeitung zur Verfügung gestellt werden können.

Gemäß einer weiteren Ausführungsform kann ein weiteres Fahrzeug vorgesehen sein. Vorzugsweise werden weitere Fahrzeugumfelddaten entsprechend einer weiteren Fahrzeugumfeld des weiteren Fahrzeugs empfangen, wobei die Fahrzeugumfeldansicht zusätzlich basierend auf den weiteren Fahrzeugumfelddaten angezeigt wird. Das heißt also insbesondere, dass die Anzeigeeinrichtung eingerichtet ist, die Fahrzeugumfeldansicht zusätzlich basierend auf weiteren Fahrzeugumfelddaten entsprechend des weiteren Fahrzeugumfelds des weiteren Fahrzeugs anzuzeigen. Das heißt also insbesondere, dass das weitere Fahrzeug sein entsprechendes Fahrzeugumfeld erfasst und die sich daraus ergebenden weiteren Fahrzeugumfelddaten an das Fahrzeug sendet, so dass dieses dann basierend auf den weiteren Fahrzeugumfelddaten seine eigene Fahrzeugumfeldansicht berechnet. So kann beispielsweise das weitere Fahrzeug rechts neben dem Fahrzeug fahren, so dass das Fahrzeug rechts von sich keine Erfassung des Fahrzeugumfelds vornehmen kann, da das weitere Fahrzeug der Erfassungseinrichtung im Wege steht. Allerdings können dann die weiteren Fahrzeugumfelddaten in vorteilhafter Weise dafür verwendet werden, um den Bereich rechts neben dem Fahrzeug in einer Fahrzeugumfeldansicht abzubilden. Insbesondere wenn das weitere Fahrzeug vor dem Fahrzeug fährt, können die entsprechenden weiteren Fahrzeugumfelddaten in vorteilhafter Weise für das Fahrzeug verwendet werden, um dem Fahrer des Fahrzeugs anzuzeigen, was sich weit im Voraus relativ zu seinem Fahrzeug befindet. Eventuelle Hindernisse oder Gefahrenstellen können so rechtzeitig erkannt werden.

Vorzugsweise umfassen die weiteren Fahrzeugumfelddaten Echtzeitvideodaten. Insbesondere können die weiteren Fahrzeugumfelddaten auch Echtzeitbilderdaten umfassen. Das heißt also insbesondere, dass dem Fahrer des Fahrzeugs eine Live-Ansicht betreffend des weiteren Fahrzeugumfelds des weiteren Fahrzeugs zur Verfügung gestellt werden kann. Das heißt also insbesondere, dass der Fahrer das sehen kann, was auch der weitere Fahrer des weiteren Fahrzeugs sehen kann.

Gemäß einer anderen Ausführungsform ist ein Sender vorgesehen, welcher Anzeigedaten an das weitere Fahrzeug und/oder an die Datenbank senden kann, wobei die Anzeigedaten der angezeigten Fahrzeugumfeldansicht entsprechen. Somit kann insbesondere der weitere Fahrer des weiteren Fahrzeugs in vorteilhafter Weise eine Information darüber erlangen, was der Fahrer des Fahrzeugs sieht. Die Datenbank kann beispielsweise in vorteilhafter Weise basierend auf den gesendeten Anzeigedaten seine eigenen Fahrzeugumfelddaten überprüfen und gegebenenfalls aktualisieren und/oder einem Operator zur manuellen Korrektur bereitstellen. Vorzugsweise kann auch vorgesehen sein, dass die Datenbank die gesendeten Fahrzeugumfeldansichtsdaten noch mehreren weiteren Fahrzeugen, insbesondere dem weiteren Fahrzeug, zur Verfügung stellt.

Gemäß einer weiteren Ausführungsform ist die Erfassungseinrichtung ausgebildet, eine geometrische Größe eines physischen Objekts des Fahrzeugumfelds zu erfassen. Das heißt also insbesondere, dass eine geometrische Größe eines physischen Objekts des Fahrzeugumfelds erfasst wird und die Fahrzeugumfeldansicht gemeinsam mit dem physischen Objekt und der geometrischen Größe angezeigt wird. Das heißt also insbesondere, dass der Fahrer in vorteilhafter Weise eine Information über beispielsweise die Größe, die Länge oder die Höhe des physischen Objekts angezeigt bekommt. Beispielsweise kann neben einer angezeigten Fahrbahn folgender Text stehen: "Fahrbahnbreite beträgt 3 m.". Beispielsweise kann neben einem physischen Objekt auch folgender Text stehen: "Objekt steht an Position x, y, z und hat die Abmaße h, b, t". Hierbei stehen die Buchstaben x, y, z und h, b, t für entsprechende Zahlenwerte, wobei h für Höhe, b für Breite und t für Tiefe stehen. Vorzugsweise kann vorgesehen sein, dass das erfasste physische Objekt klassifiziert wird. Das heißt also insbesondere, dass dem erfassten Objekt die Information zugeordnet wird, was das Objekt ist. Beispielsweise kann das Objekt als ein Fußgänger, ein Begrenzungspfosten, eine Fahrbahnmarkierung, ein Verkehrszeichen, eine Signalanlage, ein Gebäude, ein Fahrzeug oder als ein Baum klassifiziert werden.

Gemäß einer anderen Ausführungsform ist die Datenbank in das Anzeigesystem integriert. Hier kann eine solche Datenbank auch als eine interne Datenbank bezeichnet werden. Eine solche interne Datenbank kann beispielsweise über ein drahtloses Kommunikationsverfahren, insbesondere WLAN und/oder Mobilfunkkommunikationsverfahren, vorzugsweise Long Term Evolution (LTE) - Kommunikationsverfahren, mit einer weiteren externen Datenbank kommunizieren, um sich zu aktualisieren. Es kann auch vorgesehen sein, dass eine Aktualisierung der internen Datenbank mittels eines Datenträgers umfassend entsprechende aktualisierte Fahrzeugumfelddaten durchgeführt werden kann.

Gemäß einer anderen Ausführungsform kann vorgesehen sein, dass die Datenbank extern von dem Anzeigesystem angeordnet ist. Das heißt also insbesondere, dass sich die Datenbank außerhalb des Fahrzeugs befindet. Eine Kommunikation zwischen dem Anzeigesystem und der Datenbank kann dann insbesondere mittels der vorgenannten drahtlosen Kommunikationsverfahren durchgeführt werden. Eine solche Datenbank kann auch als eine externe Datenbank bezeichnet werden. Bei einer Kommunikation zwischen der externen Datenbank und dem Anzeigesystem kann vorgesehen sein, dass die entsprechende Kommunikationsschnittstelle im Fahrzeug fest angeordnet ist, beispielsweise in einem zentralen Steuergerät. Beispielsweise kann die Übermittlung auch mittels einer externen Vorrichtung wie beispielsweise ein Mobilfunktelefon, insbesondere ein Smartphone, durchgeführt werden. Diese Vorrichtung kann dann beispielsweise wiederum mit dem Fahrzeug bzw. dem Anzeigesystem kommunizieren, insbesondere mittels eines Bluetooth-Kommunikationsverfahrens.

Gemäß einer anderen Ausführungsform kann vorgesehen sein, dass eine Kommunikation zwischen dem Fahrzeug und der externen Datenbank beispielsweise mittels eines C2I-Verfahrens durchgeführt wird. Hier steht die Abkürzung C2I für den englischen Ausdruck "car to infrastructure". Ein C2I-Kommunikationsverfahren bezeichnet insofern ein Kommunikationsverfahren von einem Fahrzeug zu einer Infrastruktur bzw. zu einem physischen Objekt, was kein Fahrzeug ist, wie beispielsweise eine Signalanlage oder eine Basisstation.

Nach einer Ausführungsform kann vorgesehen sein, dass Umfelddaten von einer stationär angeordneten Infrastruktur bzw. einem stationär angeordneten physischen Objekt, was kein Fahrzeug ist, an das Fahrzeug gesendet werden, wobei die Umfelddaten dem Umfeld der Infrastruktur entsprechen. Bei einer solchen Infrastruktur kann es sich beispielsweise um eine Signalanlage, eine Brücke oder ein Gebäude handeln. Die Kommunikation zwischen der Infrastruktur und dem Fahrzeug kann insbesondere mittels des C2I-Verfahrens durchgeführt werden. Vorzugsweise kann vorgesehen sein, dass an einer solchen Infrastruktur ein Sensorsystem, wie es im Folgenden noch beschrieben wird, angeordnet ist, wobei das Sensorsystem das Umfeld der Infrastruktur sensorisch erfassen kann. Die entsprechenden Umfelddaten werden dann an das Fahrzeug gesendet, so dass in vorteilhafter Weise dem Fahrer das Umfeld der Infrastruktur angezeigt werden kann. Das heißt also, dass die Anzeigeeinrichtung zusätzlich oder anstelle der Fahrzeugumfeldansicht noch eine Umfeldansicht entsprechend der Umfelddaten anzeigen kann. Dem Fahrer weiß somit in vorteilhafter Weise, wie das Umfeld der Infrastruktur aussieht, auch wenn sich das Fahrzeug beispielsweise noch gar nicht in Sichtweite befindet, und kann seine Fahrmanöver entsprechend vorausschauend planen, was eine Fahrzeugsicherheit in vorteilhafter Weise erheblich erhöht. Auch in Situationen, in denen das Sensorsystem des Fahrzeugs keine entsprechenden Daten bereitstellt, weil beispielsweise ein Sensor des Sensorsystems verdeckt ist, und/oder in denen ein weiteres Sensorsystem eines weiteren Fahrzeugs keine entsprechenden Daten bereitstellt, weil beispielsweise ein Sensor des weiteren Sensorsystems verdeckt ist, weiß der Fahrer wie sein Umfeld aussieht, da die entsprechenden Daten mittels des Sensorsystems der Infrastruktur bereitgestellt werden.

Nach einer anderen Ausführungsform wird die Berechnung für die entsprechende Fahrzeugumfeldansicht intern in dem Anzeigesystem durchgeführt. Das heißt also insbesondere, dass das Anzeigesystem eine entsprechende Bearbeitungs- bzw. Verarbeitungseinrichtung aufweist, welche die Daten zwecks Anzeige bearbeitet. Vorzugsweise kann auch vorgesehen sein, dass eine entsprechende Berechnung extern von dem Anzeigesystem durchgeführt wird. Insbesondere kann beispielsweise die externe Datenbank eine entsprechende Berechnung einer Fahrzeugumfeldansicht durchführen und diese Daten entsprechend der berechneten Fahrzeugumfeldansicht an das Anzeigesystem zwecks Anzeige senden. Insbesondere diese Ausführungsform weist den Vorteil auf, dass das Anzeigesystem selbst über keine bzw. nur eine schwach ausgelegte Berechnungseinrichtung verfügen muss. Die Berechnung kann vorzugsweise sowohl intern im Fahrzeug bzw. im Anzeigesystem als auch extern in der externen Datenbank durchgeführt werden.

Gemäß einer weiteren Ausführungsform kann vorgesehen sein, dass Fahrzeugtrajektoriedaten entsprechend einer Fahrzeugtrajektorie des weiteren Fahrzeugs empfangen werden, wobei die Fahrzeugtrajektorie des weiteren Fahrzeugs gemeinsam mit der Fahrzeugumfeldansicht angezeigt wird. Somit gelangt der Fahrer des Fahrzeugs in vorteilhafter Weise in Kenntnis über einen entsprechenden Fahrverlauf des weiteren Fahrzeugs und kann somit in vorteilhafter Weise seine eigenen Fahrmanöver entsprechend anpassen. Insbesondere kann auch vorgesehen sein, dass eine Fahrzeugtrajektorie des eigenen Fahrzeugs angezeigt wird. Insbesondere kann bei der Berechnung der Fahrzeugtrajektorie, sei es für das eigene Fahrzeug und/oder das weitere Fahrzeug, ein geplanter Streckenverlauf eines Navigationssystems verwendet werden, so dass dadurch in vorteilhafter Weise auch eine zukünftige Fahrzeugtrajektorie angezeigt werden kann. Vorzugsweise kann vorgesehen sein, dass bei einer möglichen Kollision des Fahrzeugs mit dem weiteren Fahrzeug dem Fahrer des Fahrzeugs und/oder dem weiteren Fahrer des weiteren Fahrzeugs eine entsprechende Kollisionswarnmeldung angezeigt wird. Vorzugweise werden von dem weiteren Fahrzeug Daten aus einem oder mehreren Fahrerassistenzsystemen des weiteren Fahrzeugs an das Fahrzeug gesendet. Diese Daten können dann insbesondere in vorteilhafter Weise für eine Berechnung einer möglichen Kollision verwendet werden. Diese Berechnung kann insbesondere bereits in dem weiteren Fahrzeug durchgeführt werden, so dass vorzugsweise das Ergebnis der Berechnung an das Fahrzeug gesendet und dort angezeigt wird. Allgemein können die Daten der Fahrerassistenzsysteme des weiteren Fahrzeugs verwendet werden, um ein oder mehrere Fahrerassistenzsysteme des Fahrzeugs zu betreiben. Das heißt also insbesondere, dass die Fahrerassistenzsysteme des Fahrzeugs Daten von den Fahrerassistenzsystemen des weiteren Fahrzeugs verwenden können, um entsprechende Fahrerassistenzfunktionen bereitzustellen.

Vorzugsweise können auch Fahrerassistenzsystemdaten von Fahrerassistenzsystemen des Fahrzeugs zusätzlich oder anstelle der Daten der Fahrerassistenzsysteme des weiteren Fahrzeugs verwendet werden, um eine entsprechende Umfeldansicht des Fahrzeugs zu berechnen und anzuzeigen.

Insbesondere kann vorgesehen sein, dass die auf sämtlich zur Verfügung stehenden Daten basierenden Berechnungen, welche notwendig sind, um eine Ansicht eines Fahrzeugumfelds zu berechnen und anzuzeigen, in einer entsprechenden Berechnungseinrichtung im Fahrzeug durchgeführt werden. Vorzugsweise kann vorgesehen sein, dass die Berechnungen extern von dem Fahrzeug in einem externen Server durchgeführt werden. Insbesondere kann auch eine Kombination von einer internen, das heißt im Fahrzeug, und einer externen Berechnung, das heißt im externen Server, vorgesehen sein.

Gemäß einer anderen Ausführungsform kann vorgesehen sein, dass zeitlich jüngere Fahrzeugumfelddaten bevorzugt vor zeitlich älteren Fahrzeugumfelddaten verwendet werden, um eine entsprechende Fahrzeugumfeldansicht anzuzeigen. Dadurch wird in vorteilhafter Weise bewirkt, dass die Fahrzeugumfeldansicht, die dem Fahrer angezeigt wird, aktuell und nicht veraltet ist.

Nach noch einer weiteren Ausführungsform kann das Fahrerassistenzsystem ein Spurerkennungssystem, ein Spurhalteassistenzsystem, eine Geschwindigkeitsregeleinrichtung, eine adaptive Geschwindigkeitsregeleinrichtung ("adaptive cruise control" ACC) oder ein Spurwechselassistenzsystem sein. Das heißt also insbesondere, dass allgemein die entsprechenden Daten wie beispielsweise die Anzeigedaten dem Fahrerassistenzsystem zur Verfügung gestellt werden können, so dass dieses dann abhängig von den Daten betrieben werden kann.

Nach einer anderen Ausführungsform kann die Erfassungseinrichtung ein Sensorsystem zum sensorischen Erfassen des Fahrzeugumfelds aufweisen. Ein solches Sensorsystem kann insbesondere einen Videosensor umfassen. Beispielsweise kann das Sensorsystem auch Radarsensoren und/oder Ultraschall- und/oder Lidarsensoren umfassen. Vorzugsweise umfasst die Erfassungseinrichtung eine oder mehrere Videokameras. Ein solches vorgenanntes Sensorsystem, insbesondere die Videokameras, kann bzw. können insbesondere auch wie oben beschrieben an einer Infrastruktur angeordnet sein. Die mittels der einzelnen Sensoren bereitgestellten Daten können in vorteilhafter Weise verwendet werden, um eine entsprechende virtuelle Fahrzeugumfeldansicht zu berechnen und anzuzeigen. Somit steht in vorteilhafter Weise eine Fahrzeugumfeldansicht zur Verfügung, auch wenn keine realen Daten eines Videosensors vorliegen. Insbesondere kann vorgesehen sein, dass Daten eines Navigationssystems für eine virtuelle Fahrzeugumfeldansicht verwendet werden. Beispielsweise können solche Daten eines Navigationssystems Kartendaten einer digitalen Karte sein. Gemäß einer Ausführungsform kann bei fehlenden Fahrzeugumfelddaten auch vorgesehen sein, dass die entsprechende Fahrzeugumfeldansicht die entsprechenden Bereiche bezüglich der fehlenden Fahrzeugumfelddaten als solche Bereiche kennzeichnet, zu denen keine Fahrzeugumfelddaten bereitstehen. Beispielsweise können solche Bereiche mittels schwarzer oder weißer Flecken gekennzeichnet werden. Dadurch erlangt der Fahrer in vorteilhafter Weise Kenntnis über die Bereiche, die keine entsprechende Datengrundlage haben, um hier eine erhöhte Aufmerksamkeit aufzubringen. Insbesondere kann vorgesehen sein, dass ein oder mehrere Bereiche Teilansichten, insbesondere virtuelle Teilansichten, des Fahrzeugumfelds anzeigen, welche auf Daten von Sensoren des Fahrzeugs, auf Daten von Sensoren des weiteren Fahrzeugs oder auf Daten eines Sensorsystems einer Infrastruktur basieren. Somit hat ein Fahrer Kenntnis über seine Fahrzeugumfeldansicht, auch wenn seine eigene Videokamera nicht ausreichend Daten bereitstellt.

In einer weiteren Ausführungsform können auch mehrere weitere Fahrzeuge vorgesehen sein. Die im Zusammenhang mit dem weiteren Fahrzeug beschriebenen Ausführungsformen gelten analog auch für mehrere weitere Fahrzeuge.

Die Erfindung wird im Folgenden anhand von bevorzugten Ausführungsbeispielen unter Bezugnahme auf Figuren näher erläutert. Hierbei zeigen:
- Fig. 1: ein Ablaufdiagramm eines Anzeigeverfahrens für ein Fahrzeug,
- Fig. 2: ein Anzeigesystem für ein Fahrzeug,
- Fig. 3: ein weiteres Anzeigesystem für ein Fahrzeug,
- Fig. 4: ein Fahrerassistenzsystem für ein Fahrzeug,
- Fig. 5: ein Fahrzeug und
- Fig. 6: eine Fahrzeugumfeldansicht.

Im Folgenden werden für gleiche Merkmale gleiche Bezugszeichen verwendet.

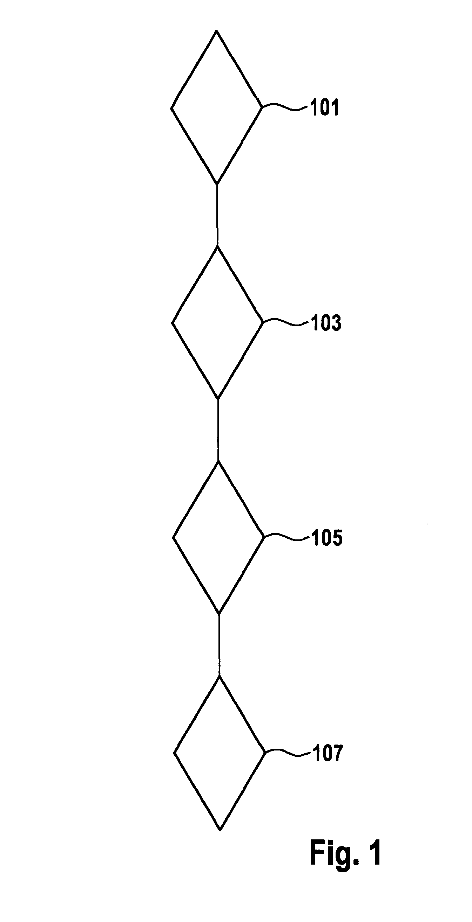

Fig. 1 zeigt ein Ablaufdiagramm eines Anzeigeverfahrens für ein Fahrzeug. In einem Schritt 101 wird eine Fahrzeugposition bestimmt. Gemäß einem Schritt 103 werden dann Fahrzeugumfelddaten aus einer Datenbank entsprechend der bestimmten Fahrzeugposition abgefragt. Das heißt also insbesondere, dass eine entsprechende Anfrage an die Datenbank gestellt bzw. gesendet wird, woraufhin dann diese die entsprechenden Fahrzeugumfelddaten übermittelt bzw. bereitstellt.

Gemäß einem Schritt 105 wird ferner ein Fahrzeugumfeld erfasst. Insbesondere umfasst das Erfassen eines Fahrzeugumfelds ein Aufnehmen von Videobildern bzw. Videodatenströmen des Fahrzeugumfelds. In einem Schritt 107 wird dann eine Fahrzeugumfeldansicht angezeigt, welche auf den abgefragten Fahrzeugumfelddaten und dem erfassten Fahrzeugumfeld basiert. Das heißt also insbesondere, dass die angezeigte Fahrzeugumfeldansicht sowohl eine Ansicht entsprechend dem erfassten Fahrzeugumfeld als auch eine Fahrzeugumfeldansicht entsprechend der Fahrzeugumfelddaten umfasst.

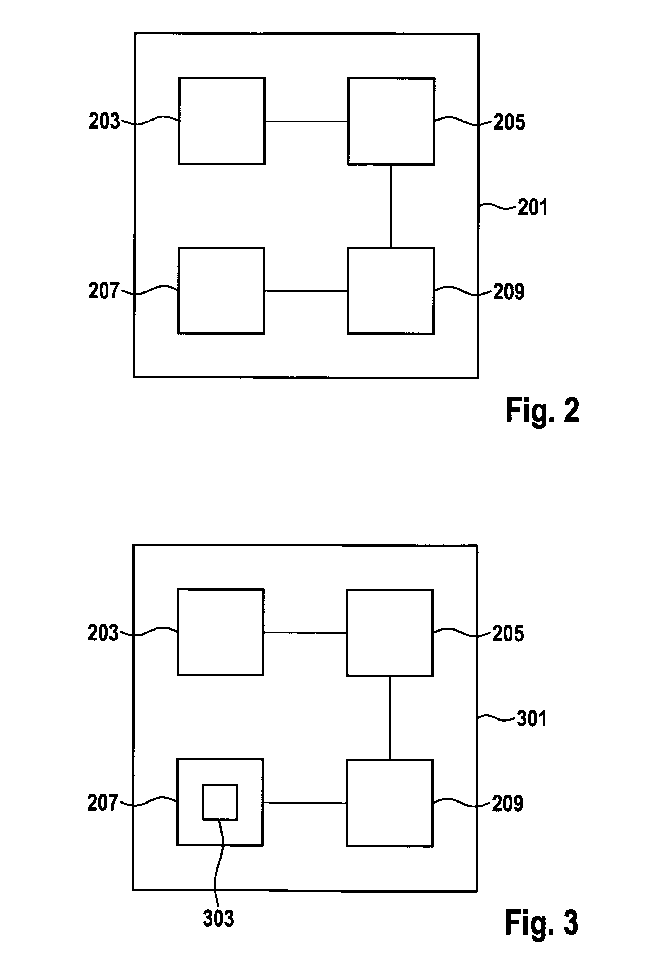

Fig. 2 zeigt ein Anzeigesystem 201 für ein Fahrzeug (nicht gezeigt). Das Anzeigesystem 201 umfasst eine Positionsbestimmungseinrichtung 203 zum Bestimmen einer Fahrzeugposition. Ferner ist ein Abfrager 205 vorgesehen, welcher Fahrzeugumfelddaten aus einer Datenbank entsprechend der bestimmten Fahrzeugposition abfragen kann. Das heißt also insbesondere, dass der Abfrager 205 eine entsprechende Anfrage an die Datenbank stellt, woraufhin diese die entsprechenden Fahrzeugumfelddaten an den Abfrager 205 sendet.

Das Anzeigesystem 201 umfasst ferner eine Erfassungseinrichtung 207 zum Erfassen eines Fahrzeugumfelds. Insbesondere umfasst die Erfassungseinrichtung eine oder mehrere Videokameras. Ferner ist eine Anzeigeeinrichtung 209 vorgesehen, welche eine Fahrzeugumfeldansicht anzeigen kann, welche auf den abgefragten Fahrzeugumfelddaten und dem erfassten Fahrzeugumfeld basiert.

Dadurch, dass zusätzlich zu einer Ansicht entsprechend dem erfassten Fahrzeugumfeld eine Ansicht entsprechend den Fahrzeugumfelddaten aus der Datenbank angezeigt wird, kann dem Fahrer eine genaue und zuverlässige Fahrzeugumfeldansicht bereitgestellt werden, selbst wenn die Erfassungseinrichtung das Fahrzeugumfeld nicht komplett erfassen kann bzw. wenn die Erfassungseinrichtung fehlerhaft arbeitet. So kann also beispielsweise die Videokamera der Erfassungseinrichtung ausfallen und trotzdem kann dem Fahrer eine Fahrzeugumfeldansicht zur Verfügung gestellt werden.

Fig. 3 zeigt ein weiteres Anzeigesystem 301, welches im Wesentlichen analog zu dem Anzeigesystem 201 in Fig. 2 aufgebaut ist. Die Erfassungseinrichtung 207 des Anzeigesystems 301 gemäß Fig. 3 umfasst noch eine Videokamera 303, welche ein Video des Fahrzeugumfelds aufnehmen kann. Vorzugsweise können auch mehrere Videokameras vorgesehen sein.

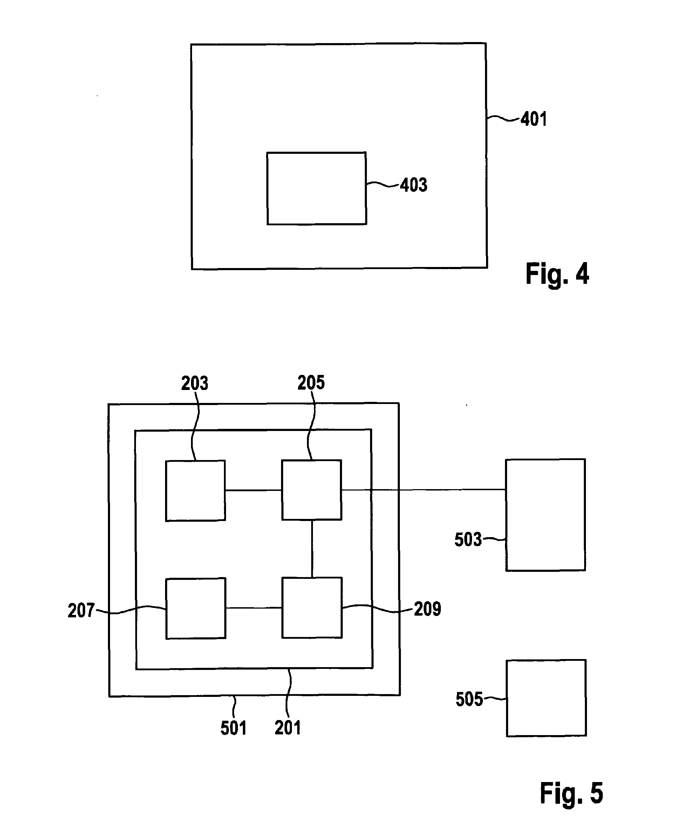

Fig. 4 zeigt ein Fahrerassistenzsystem 401 für ein Fahrzeug umfassend ein Anzeigesystem 403. Bei dem Anzeigesystem 403 kann es sich beispielsweise um das Anzeigesystem 201 oder 301 gemäß Fig. 2 respektive Fig. 3 handeln. Das heißt also insbesondere, dass die entsprechenden Daten wie beispielsweise die Anzeigedaten dem Fahrerassistenzsystem 401 zur Verfügung gestellt werden können, so dass das Fahrerassistenzsystem 401 in Abhängigkeit von diesen Daten betrieben bzw. gesteuert werden kann. Das heißt also insbesondere, dass beispielsweise die Videodaten einer Videokamera dem Fahrerassistenzsystem 401 zur Verfügung gestellt werden können, so dass diese basierend auf den Videodaten eine Entscheidung darüber trifft, ob es einen Eingriff in ein Antriebssystem, ein Bremssystem und/oder ein Lenkungssystem durchführt.

Fig. 5 zeigt ein Fahrzeug 501 umfassend das Anzeigesystem 201 gemäß Fig. 2. In einer anderen, nicht gezeigten Ausführungsform kann vorgesehen sein, dass das Fahrzeug 501 auch das Anzeigesystem 301 bzw. das Fahrerassistenzsystem 401 gemäß Fig. 3 respektive Fig. 4 umfassen kann. Es ist ferner eine externe Datenbank 503 vorgesehen. Das heißt also insbesondere, dass die externe Datenbank 503 außerhalb des Fahrzeugs 501 angeordnet ist. Der Abfrager 205 stellt eine entsprechende Anfrage bezüglich der Fahrzeugumfelddaten an der mittels der Positionsbestimmungseinrichtung 203 bestimmten Fahrzeugposition an die externe Datenbank 503, in welcher die Fahrzeugumfelddaten gespeichert sind. Die angefragten Fahrzeugumfelddaten werden dann von der externen Datenbank 503 an den Abfrager 205 gesendet.

Ferner ist auch ein weiteres Fahrzeug 505 vorgesehen, welches insbesondere sein entsprechendes Fahrzeugumfeld erfassen kann, wobei die entsprechenden weiteren Fahrzeugumfelddaten dann auch an das Anzeigesystem 201 gesendet werden können, so dass das weitere Fahrzeugumfeld des weiteren Fahrzeugs 505 auch mittels der Anzeigeeinrichtung 209 angezeigt werden kann. Vorzugsweise kann auch vorgesehen sein, dass die Anzeigedaten entsprechend der angezeigten Fahrzeugumfeldansicht der externen Datenbank 503 und/oder dem weiteren Fahrzeug 505 zur Verfügung gestellt werden können. Vorzugsweise können auch noch andere Fahrzeuge vorgesehen sein, wobei eine entsprechende Kommunikation zwischen den einzelnen Fahrzeugen analog verläuft.

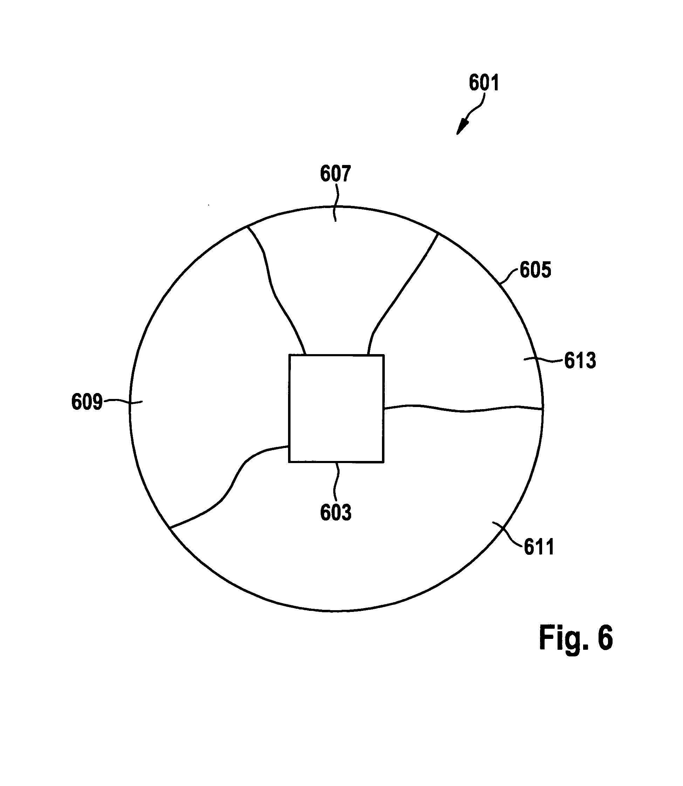

Fig. 6 zeigt eine Fahrzeugumfeldansicht 601, wie sie beispielsweise mittels der Anzeigeeinrichtung 209 angezeigt werden kann. Zentriert ist schematisch ein Fahrzeug 603 dargestellt. Ein Fahrzeugumfeldbereich rings um das Fahrzeug 603 ist hier mittels eines Kreises mit dem Bezugszeichen 605 gekennzeichnet. Vorzugsweise kann der Fahrzeugumfeldbereich 605 auch mittels anderer geometrischer Formen gekennzeichnet werden, beispielsweise mittels eines Quadrats oder Rechtecks.

Der Fahrzeugumfeldbereich 605 weist mehrere Teilbereiche 607, 609, 611 und 613 auf. Der Teilbereich 607 zeigt beispielsweise eine entsprechende Teilansicht des Fahrzeugumfelds, welche auf Sensoren einer Videokamera des Fahrzeugs 603 basieren. Der Teilbereich 609 zeigt beispielsweise eine entsprechende Teilansicht des Fahrzeugumfelds, welche auf Sensoren einer Videokamera eines weiteren hier nicht gezeigten Fahrzeugs basieren. Der Teilbereich 611 zeigt beispielsweise eine entsprechende Teilansicht des Fahrzeugumfelds, welche auf Sensoren einer Videokamera eines Infrastruktur basieren. Der Teilbereich 613 zeigt eine entsprechende virtuelle Teilansicht des Fahrzeugumfelds, welche auf Daten einer digitalen Karte eines Navigationssystems basieren.

Somit kann sich vorzugsweise eine Fahrzeugumfeldansicht aus mehreren Teilansichten zusammensetzen, welche jeweils auf Daten von unterschiedlichen Sensoren, insbesondere Radarsensoren und/oder Ultraschallsensoren und/oder Lidarsensoren, oder von Systemen wie beispielsweise einem Navigationssystem und/oder einem Fahrerassistenzsystem basieren. Vorzugsweise kann auch ein Teilbereich bzw. können auch mehrere Teilbereiche vorgesehen sein, zu denen keine Daten für eine entsprechende Teilansicht zur Verfügung stehen. Solche Teilbereiche werden dann insbesondere als solche gekennzeichnet, insbesondere mittels weißer, schwarzer oder andersfarbiger Flecken.

## Patentansprüche

1. Anzeigeverfahren für ein Fahrzeug (501), umfassend die folgenden Schritte:
- Bestimmen (101) einer Fahrzeugposition,
- Abfragen (103) von Fahrzeugumfelddaten aus einer Datenbank (503) entsprechend der bestimmten Fahrzeugposition,
- Erfassen (105) eines Fahrzeugumfelds und
- Anzeigen (107) einer auf den abgefragten Fahrzeugumfelddaten und dem erfassten Fahrzeugumfeld basierenden Fahrzeugumfeldansicht,
- wobei weitere Fahrzeugumfelddaten entsprechend einem weiteren Fahrzeugumfeld eines weiteren Fahrzeugs (505) empfangen werden und die Fahrzeugumfeldansicht zusätzlich basierend auf den weiteren Fahrzeugumfelddaten angezeigt wird.

2. Anzeigeverfahren nach Anspruch 1, wobei die weiteren Fahrzeugumfelddaten Echtzeitvideodaten umfassen.

3. Anzeigeverfahren nach einem der vorherigen Ansprüche, wobei Anzeigedaten entsprechend der angezeigten Fahrzeugumfeldansicht dem weiteren Fahrzeug (505) und/oder der Datenbank (503) zur Verfügung gestellt werden.

4. Anzeigeverfahren nach einem der vorherigen Ansprüche, wobei Umfelddaten von einem stationär angeordneten physischen Objekt an das Fahrzeug (501) gesendet werden, wobei die Umfelddaten einem Umfeld des physischen Objekts entsprechen und wobei eine Umfeldansicht entsprechend der Umfelddaten zusätzlich oder anstelle der Fahrzeugumfeldansicht angezeigt wird.

5. Anzeigeverfahren nach einem der vorherigen Ansprüche, wobei Fahrzeugtrajektoriedaten entsprechend einer Fahrzeugtrajektorie des weiteren Fahrzeugs (505) empfangen werden und die Fahrzeugtrajektorie des weiteren Fahrzeugs (505) gemeinsam mit der Fahrzeugumfeldansicht angezeigt wird.

6. Anzeigeverfahren nach Anspruch 5, wobei entsprechend der Fahrzeugtrajektoriedaten eine Kollisionswahrscheinlichkeit betreffend einer Kollision zwischen dem Fahrzeug (501) und dem weiteren Fahrzeug (505) berechnet wird und wobei eine Kollisionswarnung angezeigt wird, wenn die Kollisionswahrscheinlichkeit größer als ein vorbestimmter Wahrscheinlichkeitswert ist.

7. Anzeigeverfahren nach einem der vorherigen Ansprüche, wobei eine geometrische Größe eines physischen Objekts des Fahrzeugumfelds erfasst wird und die Fahrzeugumfeldansicht gemeinsam mit dem physischen Objekt und der geometrischen Größe angezeigt wird.

8. Anzeigeverfahren nach Anspruch 7, wobei das physische Objekt klassifiziert wird.

9. Anzeigesystem (201, 301, 403) für ein Fahrzeug (501), umfassend:
- eine Positionsbestimmungseinrichtung (203) zum Bestimmen einer Fahrzeugposition,
- einen Abfrager (205) zum Abfragen von Fahrzeugumfelddaten aus einer Datenbank (503) entsprechend der bestimmten Fahrzeugposition,
- eine Erfassungseinrichtung (207) zum Erfassen eines Fahrzeugumfelds,
- eine Anzeigeeinrichtung (209) zum Anzeigen einer auf den abgefragten Fahrzeugumfelddaten und dem erfassten Fahrzeugumfeld basierenden Fahrzeugumfeldansicht, wobei
- die Anzeigeeinrichtung ferner eingerichtet ist, die Fahrzeugumfeldansicht zusätzlich basierend auf weiteren Fahrzeugumfelddaten entsprechend eines weiteren Fahrzeugumfelds eines weiteren Fahrzeugs (505) anzuzeigen.

10. Anzeigesystem (201, 301, 403) nach Anspruch 9, wobei die weiteren Fahrzeugumfelddaten Echtzeitvideodaten umfassen.

11. Anzeigesystem (201, 301, 403) nach Anspruch 9 oder 10, wobei ein Sender zum Senden von der angezeigten Fahrzeugumfeldansicht entsprechendeAnzeigedaten an das weitere Fahrzeug (505) und/oder an die Datenbank (503) vorgesehen ist.

12. Anzeigesystem (201, 301, 403) nach einem der Ansprüche 9 bis 11, wobei die Erfassungseinrichtung (207) ausgebildet ist, eine geometrische Größe eines physischen Objekts des Fahrzeugumfelds zu erfassen.

13. Fahrerassistenzsystem (401) für ein Fahrzeug (501), mit einem Anzeigesystem (201, 301, 403) nach einem der Ansprüche 9 bis 12.

14. Computerprogramm umfassend Programmcode zur Durchführung des Anzeigeverfahrens nach einem der Ansprüche 1 bis 8, wenn das Computerprogramm auf einem Computer ausgeführt wird.

## Claims

1. Display method for a vehicle (501), comprising the following steps:
- determining (101) a vehicle position,
- interrogating (103) vehicle surroundings data from a database (503) in accordance with the determined vehicle position,
- detecting (105) vehicle surroundings, and
- displaying (107) a vehicle surroundings view which is based on the interrogated vehicle surroundings data and the detected vehicle surroundings,
- wherein further vehicle surroundings data are received in accordance with further vehicle surroundings from a further vehicle (505) and the vehicle surroundings view is additionally displayed on the basis of the further vehicle surroundings data.

2. Display method according to Claim 1, wherein the further vehicle surroundings data comprises real time video data.

3. Display method according to one of the preceding claims, wherein display data are made available to the further vehicle (505) and/or the database (503) in accordance with the displayed vehicle surroundings view.

4. Display method according to one of the preceding claims, wherein surroundings data are transmitted from a physical object which is arranged in a fixed fashion to the vehicle (501), wherein the surroundings data corresponds to surroundings of the physical object, and wherein a surroundings view is displayed in accordance with the surroundings data, additionally or instead of the vehicle surroundings view.

5. Display method according to one of the preceding claims, wherein vehicle trajectory data is received in accordance with a vehicle trajectory of the further vehicle (505), and the vehicle trajectory of the further vehicle (505) is displayed together with the vehicle surroundings view.

6. Display method according to Claim 5, wherein a collision probability relating to a collision between the vehicle (501) and the further vehicle (505) is calculated in accordance with the vehicle trajectory data, and wherein a collision warning is displayed if the collision probability is greater than a predetermined probability value.

7. Display method according to one of the preceding claims, wherein a geometric variable of a physical object of the vehicle surroundings is detected, and the vehicle surroundings view is displayed together with the physical object and the geometric variable.

8. Display method according to Claim 7, wherein the physical object is classified.

9. Display system (201, 301, 403) for a vehicle (501), comprising:
- a position-determining device (203) for determining a vehicle position,
- an interrogator (205) for interrogating vehicle surroundings data from a database (503) in accordance with the determined vehicle position,
- a detection device (207) for detecting vehicle surroundings,
- a display device (209) for displaying a vehicle surroundings view based on the interrogated vehicle surroundings data and the detected vehicle surroundings, wherein
- the display device is also configured to display the vehicle surroundings view additionally on the basis of further vehicle surroundings data in accordance with further vehicle surroundings of a further vehicle (505).

10. Display system (201, 301, 403) according to Claim 9, wherein the further vehicle surroundings data comprises real time video data.

11. Display system (201, 301, 403) according to Claim 9 or 10, wherein a transmitter is provided for transmitting corresponding display data from the displayed vehicle surroundings view to the further vehicle (505) and/or to the database (503).

12. Display system (201, 301, 403) according to one of Claims 9 to 11, wherein the detection device (207) is designed to detect a geometric variable of a physical object of the vehicle surroundings.

13. Driver assistance system (401) for a vehicle (501), with a display system (201, 301, 403) according to one of Claims 9 to 12.

14. Computer program comprising program code for carrying out the display method according to one of Claims 1 to 8 when the computer program is run on a computer.

## Revendications

1. Procédé d'affichage pour un véhicule (501), comprenant les étapes suivantes :
- détermination (101) d'une position de véhicule ;
- interrogation (103) des données d'environnement du véhicule à partir d'une base de données (503) en fonction de la position de véhicule déterminée ;
- détection (105) d'un environnement du véhicule ; et
- affichage (107) d'une vue d'environnement du véhicule basée sur les données d'environnement du véhicule interrogées et l'environnement du véhicule détecté, des données d'environnement du véhicule supplémentaires étant reçues en fonction d'un environnement du véhicule supplémentaire d'un véhicule (505) supplémentaire et la vue d'environnement du véhicule étant en outre affichée sur la base des données d'environnement du véhicule supplémentaires.

2. Procédé d'affichage selon la revendication 1, les données d'environnement du véhicule supplémentaires comprenant des données vidéo en temps réel.

3. Procédé d'affichage selon l'une quelconque des revendications précédentes, les données d'affichage correspondant à la vue d'environnement du véhicule affichée étant mises à disposition du véhicule (505) supplémentaire et/ou de la base de données (503).

4. Procédé d'affichage selon l'une quelconque des revendications précédentes, les données d'environnement étant envoyées au véhicule (501) à partir d'un objet physique disposé de façon stationnaire, les données d'environnement correspondant à un environnement de l'objet physique et une vue d'environnement étant affichée en fonction des données d'environnement, en sus ou à la place de la vue d'environnement du véhicule.

5. Procédé d'affichage selon l'une quelconque des revendications précédentes, les données de trajectoire de véhicule étant reçues en fonction d'une trajectoire de véhicule du véhicule (505) supplémentaire et la trajectoire de véhicule du véhicule (505) supplémentaire étant affichée conjointement avec la vue d'environnement du véhicule.

6. Procédé d'affichage selon la revendication 5, une probabilité de collision relative à une collision entre le véhicule (501) et le véhicule (505) supplémentaire étant calculée en fonction des données de trajectoire de véhicule et un avertissement de collision étant affiché lorsque la probabilité de collision est supérieure à une valeur de probabilité prédéterminée.

7. Procédé d'affichage selon l'une quelconque des revendications précédentes, une dimension géométrique d'un objet physique de l'environnement du véhicule étant déterminée et la vue d'environnement du véhicule étant affichée conjointement avec l'objet physique et la dimension géométrique.

8. Procédé d'affichage selon la revendication 7, l'objet physique étant classé.

9. Système d'affichage (201, 301, 403) pour un véhicule (501), comprenant :
- un dispositif de détermination de position (203) pour déterminer une position de véhicule ;
- un système d'interrogation (205) pour interroger les données d'environnement du véhicule provenant d'une base de données (503) en fonction de la position de véhicule déterminée ;
- un dispositif de détection (207) pour détecter un environnement du véhicule ;
- un dispositif d'affichage (209) pour afficher la vue d'environnement du véhicule sur la base des données d'environnement du véhicule interrogées et de l'environnement du véhicule détecté ;
- le dispositif d'affichage étant en outre conçu pour afficher la vue d'environnement du véhicule supplémentaire sur la base des données d'environnement du véhicule supplémentaires en fonction d'un environnement du véhicule supplémentaire d'un véhicule (505) supplémentaire.

10. Système d'affichage (201, 301, 403) selon la revendication 9, les données d'environnement du véhicule supplémentaires comprenant des données vidéo en temps réel.

11. Système d'affichage (201, 301, 403) selon la revendication 9 ou 10, un émetteur étant prévu pour envoyer au véhicule (505) supplémentaire et/ou à la base de données (503) les données d'affichage correspondant à la vue d'environnement du véhicule affichée.

12. Système d'affichage (201, 301, 403) selon l'une quelconque des revendications 9 à 11, le dispositif de détection (207) étant conçu pour détecter la dimension géométrique d'un objet physique de l'environnement du véhicule.

13. Système d'aide à la conduite (401) pour un véhicule (501), avec un système d'affichage (201, 301, 403) selon l'une quelconque des revendications 9 à 12.

14. Programme informatique comprenant un code de programmation pour la mise en oeuvre du procédé d'affichage selon l'une quelconque des revendications 1 à 8, lorsque le programme informatique est exécuté sur un ordinateur.
